# EUROPEAN PATENT SPECIFICATION

(11) **EP 1 777 046 B1**
(45) Date of publication and mention of the grant of the patent: **12.12.2012**
(21) Application number: 06021830.2
(22) Date of filing: 18.10.2006
(51) Int. Cl.: B27B 5/29, B23D 45/04, B23D 59/00, B27G 19/02

(54) **Cutting tools**
Trennwerkzeuge
Outils de découpage

(30) Priority: 19.10.2005 JP 2005304393
(43) Date of publication of application: 25.04.2007
(73) Proprietor: Makita Corporation, Anjo-shi, Aichi-ken (JP)
(72) Inventor: Yamamura, Goh, Anjo-shi, Aichi-ken (JP); Kani, Toshiyuki, Anjo-shi, Aichi-ken (JP)
(74) Representative: Kramer - Barske - Schmidtchen

(56) References cited:
- EP-A1- 0 538 066
- EP-A2- 1 570 963
- DE-A1- 19 743 498
- JP-A- 9 300 309

## Description

The present invention relates to a cutting tool according to the preamble of claim 1, such as a table saw having a cutting unit that is moved to cut a workpiece placed on a table or a base. Such a cutting tool is known from the closest prior art document DE 197 43 498 A1.

A known table saw has a table for placing a workpiece thereon, and a cutting unit vertically pivotally supported on the table and having a circular cutting blade (saw blade), so that the rotating circular cutting blade will cut the workpiece as the cutting unit is pivoted downward. After the cutting operation, the cutting unit is pivoted upward to return to the rest position. The cutting unit is held in the rest position when the table saw is not used.

The upper region of the cutting blade corresponding to substantially the half of the circumferential length is covered by a blade case, while the lower region of the cutting blade corresponding to substantially the remaining half of circumferential length is covered by a safety cover that is configured to be opened and closed. In general, the safety cover is coupled to the cutting unit via a link arm or the like, so that the safety cover is opened and closed as the cutting unit moves upward and downward. When the cutting unit has returned to the rest position, the safety cover is closed to cover the lower side of the cutting blade. As the cutting unit is moved downward from the rest position, the safety cover is opened to expose the lower portion of the cutting blade.

The cutting unit is prevented from moving downward from the rest position (i.e., the upper dead center) by a lock device. Such a lock device is disclosed, for example, in Japanese Laid-Open Patent Publication No. 9-300309 (Japanese Patent No. 3,553,267). According the lock device disclosed in this publication, a lock pin engages the cutting unit to prevent the cutting unit from moving downward and the safety cover is locked at the close position when the cutting unit has returned to the rest position. A lock-releasing lever is disposed adjacent to a handle and is operable to disengage the lock pin, so that the cutting unit can move downward and the lock condition of the safety cover at the close position can be released. Japanese Laid-Open Patent Publication No. 3-43115 (Japanese Patent No. 2,67192) also teaches a known lock device.

Although the lock-releasing lever is disposed adjacent to the handle in the above-described known lock device, in order to move the cutting unit downward from the rest position, it is necessary for an operator to grasp the handle and then to operate the lock-releasing lever for releasing the lock condition by his or her finger tips while keeping the grasping condition of the handle. Therefore, there has been a problem in the operability

It is accordingly an object of the present invention to teach cutting tools enabling a lock lever to be easily operated for releasing a lock condition of a cutting unit at a rest position or an upper dead center.

This object is achieved by a cutting tool comprising the combination of features of independent claim 1. Preferred embodiments are disclosed by the dependent claims.

With the arrangement according to claim 1, as the operator grasps the grip portion of the handle of the cutting unit in the rest position, the lock-releasing lever can be operated by the hand of the operator. Therefore, the lock releasing operation can be easily performed.

As the lock-releasing lever is operated, the bracket may move along the connecting portion of the handle, so that the actuation rod axially moves to shift the lock pin from the lock position to the unlock position. Because the lock pin is axially moved from the lock position to the unlock position by the operation of the lock-releasing lever, it is possible to increase the stroke of movement of the lock pin between the lock position and the unlock position without increasing the amount of operation of the lock-releasing lever in comparison with the construction where the actuation rod is rotated about its axis. Therefore, the operation for switching between the lock condition and the unlock condition can be reliably performed.

In one embodiment, the lock-releasing lever is vertically pivotally supported by the bracket about a pivotal axis and is operated for releasing the lock condition by two pivoting steps including a first step and a second step. In the first step, the lock-releasing lever pivots about the pivotal axis. In the second step, the bracket moves along the connecting portion.

Because the lock-releasing lever is operated by two pivoting steps, it is possible to increase the moving amount of the bracket and the actuation rod in comparison with the construction where the lock-releasing lever is moved simply in parallel. Therefore, it is possible to further reliably perform the switching operation between the lock condition and the unlock condition and to improve the operation feeling of the operator.

Preferably, the lock-releasing lever is pivoted about its one end in the first step and is pivoted about its opposite end in the second step. This arrangement enables the operator to grasp the handle in the same manner as the handle having a lock-releasing lever that simply moves in parallel. Thus, either at the beginning of the first step and at the end of the second step, the lock-releasing lever may be positioned parallel to and along the grip portion. In particular, because the lock-releasing lever may be positioned parallel to the grip portion at the end of the second step, it is possible to maintain a good operation feeling of the handle during the cutting operation that is performed with the handle grasped.

In another embodiment, the cutting unit further includes a circular cutting blade adapted to be rotatably driven and a cover for covering a lower portion of the cutting blade. The bracket includes a stopper arm movable between a first position and a second position with change of the position of the bracket in response to the operation of the lock-releasing lever. The stopper arm in the first position enters a moving path of the cover and prevents the cover from being opened. The stopper arm in the second position is out of the moving path of the cover and permits the cover to be opened.

With this arrangement, it is possible to reliably perform the switching operation between the lock condition and the unlock condition.

Additional objects, features, and advantages, of the present invention will be readily understood after reading the following detailed description together with the claims and the accompanying drawings, in which:
FIG. 1 is a side view of a table saw according to a first representative embodiment of the present invention;
FIG. 2 is a side view of a cutting unit of the table saw moved upward to a rest position; and
FIG. 3 is a side view of the cutting unit moved downward to a cutting position and showing a lock-releasing lever positioned at an operative position indicated by two-dot chain lines and a stopper arm held at a rest position indicated by two-dot chain lines;
FIG. 4 is a side view of the lock-releasing lever and its surroundings and showing the state corresponding to the lock state at the upper dead center of the cutting unit before the lock-releasing lever has not been operated;
FIG. 5 is a view similar to FIG. 4 but showing the lock-releasing lever before releasing the lock state and after completing the first step of the operation for releasing the lock state; and
FIG. 6 is a view similar to FIG. 4 but showing the state corresponding to the unlock state of the cutting unit after completing the second step of the operation for releasing the lock state;
FIG. 7 is a front view of the cutting unit as viewed from the side of the operator and showing a connecting portion of the handle in a vertical cross section;
FIG. 8 is a view of the lock device as viewed in a direction indicated by arrow (9) in FIG. 2; and
FIG. 9 is a side view of a handle of a table saw according to a second representative embodiment and showing a lock-releasing lever operated to an operative position by solid lines and showing the lock lever in an inoperative position by two-dot chain lines.

Each of the additional features and teachings disclosed above and below may be utilized separately or in conjunction with other features and teachings to provide improved cutting tools. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

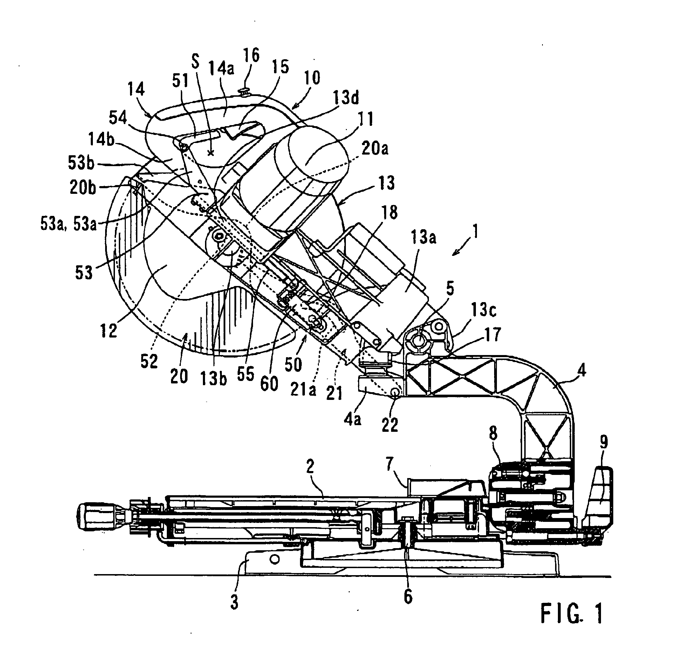

Embodiments of the present invention will now be described with reference to FIGS. 1 to 9. FIG. 1 shows a cutting tool 1 according to a first representative embodiment, which is embodied as a table saw, or a desktop saw.

The cutting tool 1 generally has a table 2 for placing a workpiece (not shown) thereon, a base 3 for rotatably supporting the table 2 within a substantially horizontal plane, an L-shaped arm 4 extending upward from the rear portion (right portion as viewed in FIG. 1) of the table 2, and a cutting unit 10 vertically pivotally supported on a front end of the arm 2 via a support shaft 5. In general, in order to operate the cutting tool 1, the operator may be positioned on the left side of the cutting tool 1 as viewed in FIG. 1. The operator may then grasp a handle 14 with one hand and may vertically move the cutting unit 10 for the cutting operation.

The table 2 is supported on the upper surface of the base 3 and is rotatable within the horizontal plane about a support shaft 6 mounted to the upper surface of the base 3.

A fence 7 for positioning the workpiece within the plane of table surface is disposed above the table 2. The fence 7 extends across the table 2 and is attached to opposite side portions of the base 3.

The arm 4 is mounted to the rear portion of the table 2 via a pivotal support 8. The pivotal support 8 supports the arm 4 and eventually the cutting unit 10 such that they can pivot in right and left directions (i.e., directions perpendicular to the sheet of FIG. 1) with respect to a cutting direction of the workpiece. The laterally pivoted position of the arm 4 or the cutting unit 10 relative to the table 2 can be fixed by tightening a fixing lever 9.

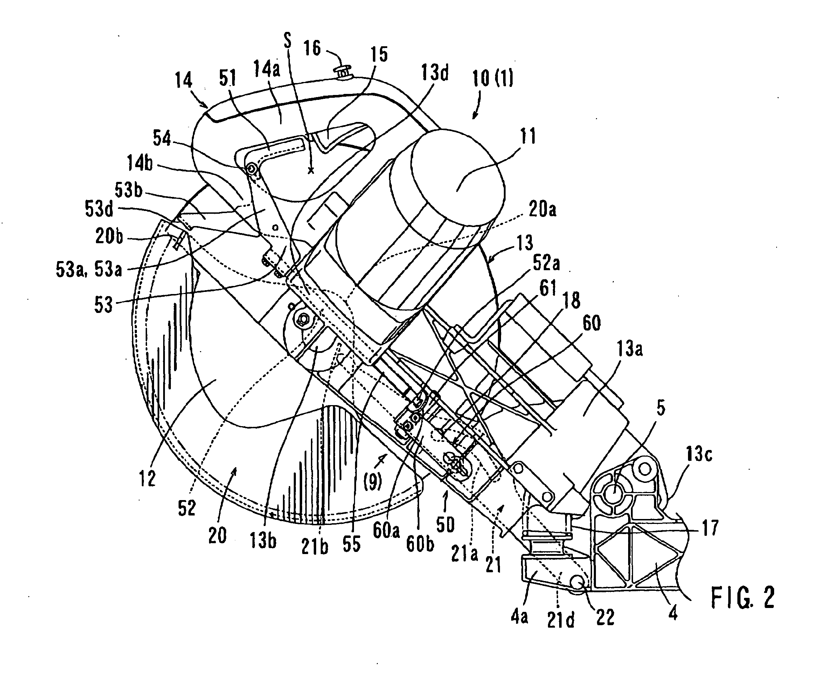

As shown in FIGS. 1 and 2, the cutting unit 10 has a circular cutting blade 12 that may be a circular saw blade. An electric motor 11 rotatably drives the cutting blade 12. A substantially upper half of the cutting blade 12 is positioned within a blade case 13 and is covered by the blade case 13. The blade case 13 covers both the front side and the back side of the cutting blade 12. A motor base 13d is disposed on the back side (front side of the sheet of FIG. 1, i.e., the right side as viewed by the operator) of the blade case 13. The motor 11 is mounted to the motor base 13d.

The cutting blade 12 is attached to a support shaft 13b disposed at the lower portion on the back side of the blade case 13b. The support shaft 13d is rotatably driven by the motor 11. A joint portion 13a is disposed on the right end portion as viewed in FIG. 1 of the blade case 13 and is vertically pivotally supported by the front end of the arm 4 via the support shaft 5.

A compression spring 17 is interleaved between a base member 4a attached to the front end of the arm 4 and the joint portion 13a of the blade case 13, so that the compression spring 17 normally biases the cutting unit 10 upwardly toward an upper dead center or a rest position. FIGS. 1 and 2 show the cutting unit 10 in the rest position.

A first end or a base end 21d of a link arm 21 is vertically pivotally joined to the base member 4a of the arm 4 via a support shaft 22. An arc-shaped guide slot 21a is formed in the substantially middle portion in the longitudinal direction of the link arm 21 and is curved to be convex upward. A guide pin 18 protrudes from the back side of the blade case 13 and engages the guide slot 21a. Therefore, as the cutting unit 10 vertically pivots about the support shaft 5, the position of the guide pin 18 changes along the guide slot 21a, so that the link arm 21 also vertically pivots about the support shaft 22.

The upper dead center or the upper stroke end of the cutting unit 10 is set to be fixed through contact of the guide pin 18 with the upper end of the guide slot 21a.

A D-shaped handle 14 is disposed on the back side of the blade case 13 and adjacent to the motor base 13d. A substantially straight-line portion of the handle 14 is configured as a grip portion 14a that may be grasped by the operator. One end of the grip portion 14a extends to a position adjacent to the upper portion of the motor base 13d. The other end of the grip portion 14a extends to a position adjacent to the lower portion of the motor base 13d via a connecting portion 14b. Therefore, the grip portion 14a, the connecting portion 14b and the motor base 13d define a substantially triangular space S within the handle 14. In order to grasp the grip portion 14a, the operator may enter his or her fingertips into the space S

A switch lever 15 is configured as a trigger and is disposed on the inner side (with respect to the space S) of the grip portion 14a. By pivoting the switch lever 15 toward a pull-in side (ON side) using fingertips of fingers that grasp the grip portion 14a, the motor 11 starts to rotate the cutting blade 12 at a high speed. A lock-off button 16 is disposed on the outer side (with respect to the space S) of the grip portion 14a. If a thumb of the operator pushes the lock-off button, a forefinger may be used for operating the switch lever 15 to the ON side. The lock-off button 16 serves to prevent the ON operation of the switch lever 15 unless the lock-off button 16 is pushed. Therefore, the motor 11 is prevented from being accidentally started.

A lock device 50 for locking the cutting unit 10 at the upper dead center or the rest position has a lock-releasing lever 51 positioned below the grip portion 14a and on the inner side (with respect to the space S) of the grip portion 14a. The details of the lock device 50 will be described later.

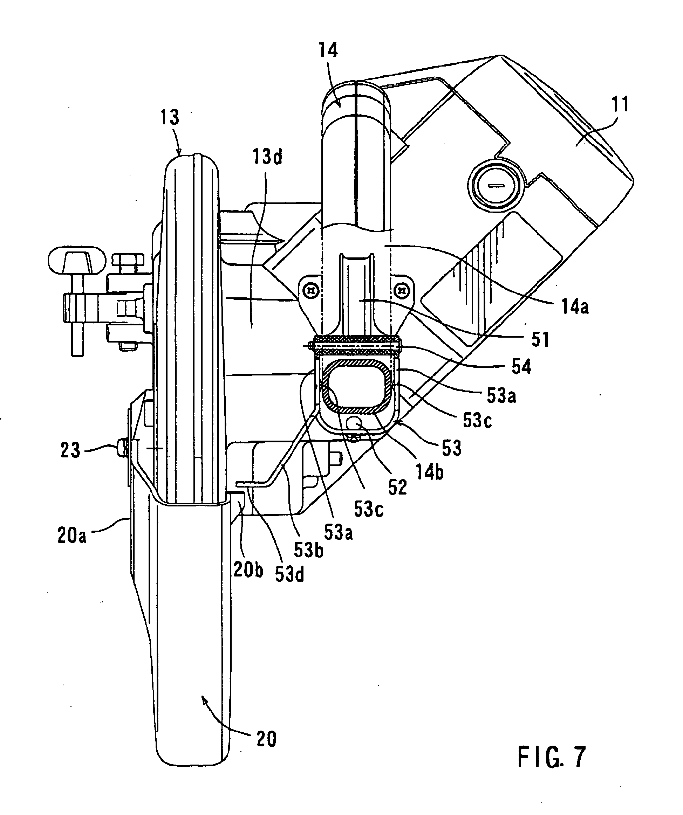

A cover 20 is mounted to the lower portion (on the open side) of the blade case 13 and serves to cover the peripheral portion of the cutting blade 12 along the circumference of substantially lower half of the cutting blade 12. As shown in FIG. 7, on the front side of the cover 20, a support plate 20a is formed integrally with the cover 20 in order to cover the front side of the cutting blade 12. One end of the support plate 20a is rotatably supported by the lower portion on the front side of the blade case 13 via a support shaft 23. The support shaft 23 has an axis that is substantially in line with the rotational axis of the cutting blade 12, i.e., the axis of the support shaft 13b. Therefore, the cover 20 can rotate about substantially the same axis as the rotational axis of the cutting blade 12.

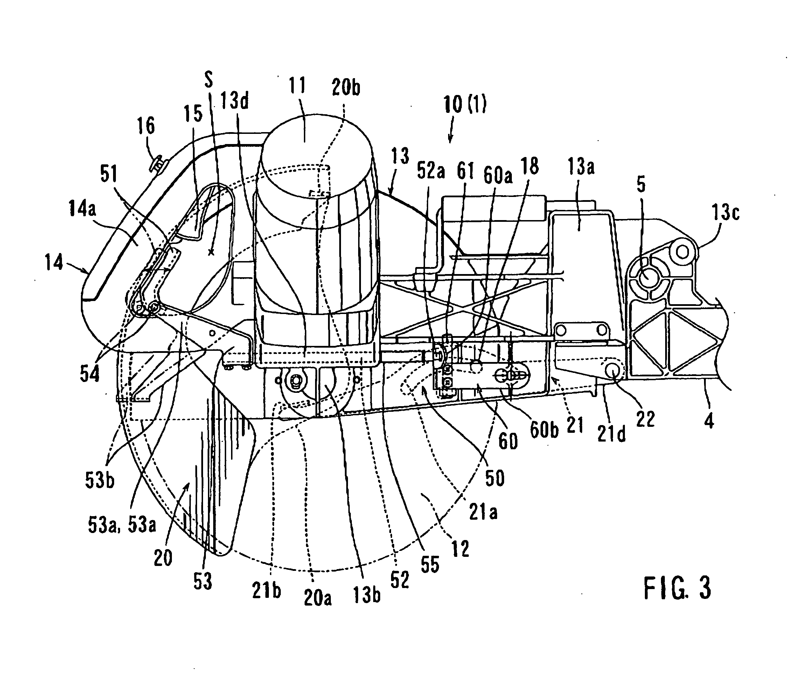

Rotating the cover 20 in the clockwise direction as viewed in FIGS. 1 and 2 may open the cover 20 to expose the cutting blade 12. On the other hand, rotating the cover 20 in the counterclockwise direction may close the cover 20 to cover the cutting blade 12. FIGS. 1 and 2 show the cover 20 in the close position. FIG. 3 shows the cover 20 in the open position.

In response to the vertical movement of the cutting unit 20, the cover 20 is opened and closed by the link arm 21 that is connected between the blade case 13 and the arm 4. When the cutting unit 10 is held in the rest position as shown in FIGS. 1 and 2, the cover 20 is held in the close position. As the cutting unit 10 pivots downward from the rest position toward a cutting position as shown in FIG. 3, the cover 20 rotates in the clockwise direction so as to be opened.

A second end opposite to the base end 21 of the link arm 21d is configured as a free end and normally abuts to a contact plate 21d that protrudes from the support plate 20a of the cover 20. Therefore, the second end forces to pivot the cover 20 about the support shaft 23 via the contact plate 21d to open the cover 20 as the position of the second end changes about the support shaft 23 in response to the downward movement of the cutting unit 10.

A stopper edge 20b is formed integrally with a circumferential end on the back side of the cover 20 and may cooperate with the lock device 50 for locking the cover 20 at the closed position as will be explained later.

The lock device 50 is operable to releasably lock the cutting unit 10 at the rest position or the upper dead center in order to prevent the cutting unit 10 from moving downward. The lock-releasing lever 51 is operable to release the lock condition of the cutting unit 10 at the rest position.

An actuation rod 52 is axially movably supported by the motor base 13d. One end (left end as viewed in FIG. 2) of the actuation rod 52 extends leftward from one side (left side as viewed in FIG. 2) of the motor base 13d and toward the side of the operator. A bracket 53 is fixedly attached to the one end of the actuation rod 52. As shown in FIG. 7, the bracket 53 is bifurcated to form a pair of support portions 53a that extend over the connecting portion 14b of the handle 14 from the opposite sides, so that the support portions 53a can move relative to the connecting portion 14b along the longitudinal direction of the connecting portion 14b. Terminal ends of the support portions 53a extend to a position within the handle 14 and adjacent to a bent portion provided between the grip portion 14a and the connecting portion 14b. A support shaft 54 is connected between the terminal ends of the support portions 53a. The lock-releasing lever 51 is vertically pivotally supported by the support shaft 54 within a predetermined angular range. A torsion spring (not shown) may be interleaved between the lock-releasing lever 51 and the connecting portions 53a in order to normally bias the lock-releasing lever 51 in the clockwise direction as viewed in FIGS. 1 and 2. A stopper (not shown) may define a pivotal stroke end or an inoperative position of the lock-releasing lever 51 in the clockwise direction and may hold the lock-releasing lever 51 at this stroke end. At the pivotal stroke end, the lock-releasing lever 51 extends in substantially parallel to the grip portion 14a as shown in FIGS. 1, 2 and 5.

Referring to FIG. 7, the lock-releasing lever 51 has a substantially semicircular arc-shaped configuration in cross section and is positioned along inside of the grip portion 14a. Therefore, the lock-releasing lever 51 can be grasped by the operator at the same time that the operator grasps the grip portion 14a. Therefore, the lock-releasing lever 51 may be pivoted to be pressed against the grip portion 14a in order to release the lock condition as will be explained later.

As shown in FIG. 7, projections 53c are respectively formed on the support portions 53a and extend toward the connecting portion 14b of the handle 14. The distance between the projections 53c is set to be slightly greater than the size in right and left directions as viewed in FIG. 7 of the connecting portion 14b. This setting enables the smooth actuation of the lock-releasing lever 51 and the bracket 53. Further, because the projections 53c are configured as point-like ones in this representative embodiment, the distance can be easily adjusted depending on the manufacturing tolerance of the parts of the bracket 53.

Referring again to FIG. 7, a stopper arm 53b extends from the left side support portion 63a and has a terminal end 53b that is positioned to oppose to a stopper edge 20b of the cover 20 in the opening direction of the cover 20 or oppose to the upper side of the stopper edge 20b when the lock-releasing lever 51 is not operated. In other words, the terminal end 53b enters the moving path of the stopper edge 20b of the cover 20 for opening the cover 20. Therefore, the cover 20 may be prevented from pivoting in the opening direction. The lock-releasing lever 51 can be operated to move the terminal end 53b of the stopper arm 53b out of the moving path of the stopper edge 20b.

The other end (right end as viewed in FIG. 2) of the actuation rod 52 protrudes rearward (rightward as viewed in FIG. 2) from the opposite side of the motor base 13d. A compression spring 55 is interleaved between the actuation rod 52 and the motor base 13d in order to bias the actuation rod 52 rightward or in a direction for the locking operation (hereinafter also called "locking direction") as will be hereinafter described.

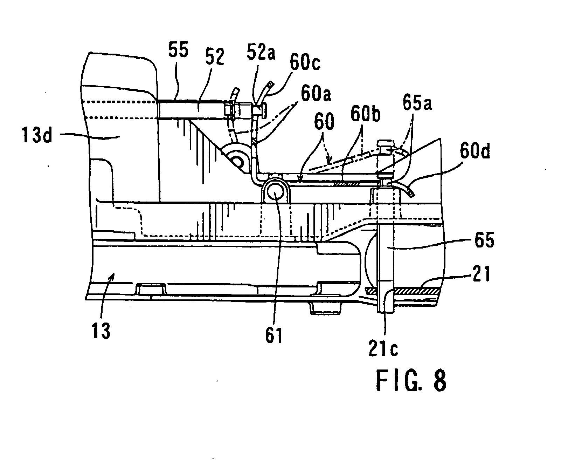

The other end or the right end of the actuation rod 52 is joined to an actuation bracket 60 disposed on the back side of the blade case 13. As shown in FIG. 8, the actuation bracket 60 is formed by bending a strip to have an L-shaped configuration and has an upright portion 60a and an actuation portion 60b. The upright portion 60a extends substantially perpendicular to the back side of the blade case 13 (upward as viewed in FIG. 8). The actuation portion 60b extends substantially along the back side of the blade case 13. The actuation bracket 60 is pivotally supported by the blade case 13 at a bent portion between the upright portion 60a and the actuation portion 60b via a support shaft 61. Guide slots 60c and 60d each having a keyhole-like configuration are respectively formed in the opposite ends of the actuation bracket 60, i.e., the terminal ends of the upright portion 60a and the actuation portion 60b.

The rear end of the actuation rod 52 has a small diameter portion 52a that is inserted into the guide slot 60c of the upright portion 60a, so that the rear end of the actuation rod 52 is connected to the upright portion 60a to move together therewith in the axial direction of the actuation rod 52. Therefore, as the actuation rod 52 moves in the axial direction, the actuation bracket 60 pivots about the support shaft 61. More specifically, as the actuation rod 52 moves rightward as viewed in FIG. 8, the upright portion 60a is pushed to cause the pivotal movement of the actuation bracket 60 toward a first position indicated by solid lines in FIG. 8 (i.e., the pivotal movement in the clockwise direction as viewed in FIG. 8). On the contrary, as the actuation rod 52 moves leftward as viewed in FIG. 8, the upright portion 60a is pulled to cause the pivotal movement of the actuation bracket 60 toward a second position indicated by two-dot chain lines in FIG. 8 (i.e., the pivotal movement in the counterclockwise direction as viewed in FIG. 8). The first position and the second position of the actuation bracket 60 respectively correspond to a lock position and an unlock position of the lock pin 65.

As the actuation bracket 60 pivots toward the first position, the actuation portion 60b moves toward the backside surface of the blade case 13 (see the position indicated by solid lines in FIG. 8), so that the lock pin 65 moves downward as viewed in FIG. 8 toward the lock position. On the contrary, as the actuation bracket 60 pivots toward the second position, the actuation portion 60b moves away from the backside surface of the blade case 13, so that the lock pin 65 moves upward as viewed in FIG. 8 toward the unlock position.

As shown in FIG. 8, a lock hole 21c is formed in the link arm 21. As the actuation rod 52 moves from the unlock position to the lock position, the lower end of the actuation rod 52 is inserted into the lock hole 21c. On the contrary, as the actuation rod 52 moves from the lock position to the unlock position, the lower end of the actuation rod 52 is removed from the lock hole 21c.

With the lower end of the lock pin 65 inserted into the lock hole 21c, the link arm 21 cannot move along the backside surface about the support shaft 22. Therefore, the guide pin 18 may be prevented from moving along the guide slot 21a. As a result, the cutting unit 10 is locked at the rest position and is prevented from moving downward from the rest position.

The operation of the above representative embodiment will be described in connection with the operation of the lock device 50 for releasably locking the cutting unit 10 at the rest position or the upper dead center. When the cutting unit 10 is positioned in the rest position as shown in FIGS. 1 and 2 due to the biasing force of the compression spring 17, the actuation rod 52 has moved rightward to pivot the actuation bracket 60 and to move the actuation portion 60b toward the backside surface of the blade case 13 by the biasing force of the compression spring 55. Therefore, the lock pin 65 is inserted into the lock hole 21c of the link arm 21, so that the cutting unit 10 is locked at the rest position.

In this lock condition, the actuation rod 52 has moved rightward to its rightward stroke end to position the terminal end 53d of the stopper arm 53b to oppose to the stopper edge 20b of the cover 20 from the upper side. Therefore, the cover 20 is prevented from moving in the open direction (the clockwise direction as viewed in FIGS. 1 and 2). As a result, the cover 20 is prevented from being accidentally opened in the lock condition of the cutting unit 10.

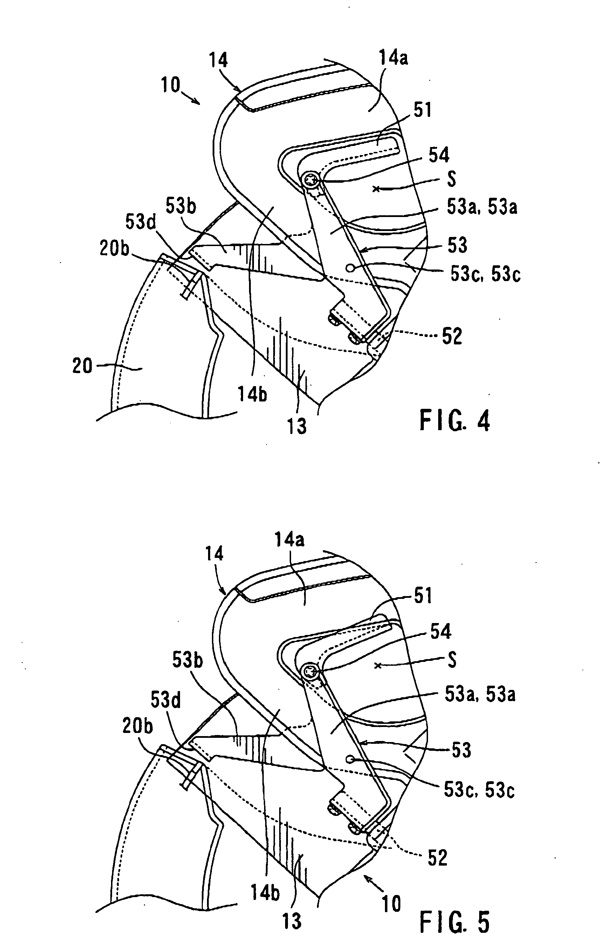

In addition, in the lock condition, the lock-releasing lever 51 is positioned away from the grip portion 14a of the handle 14. The positional relations between the stopper arm 53b and the stopper edge 20b and between the grip portion 14a and the lock-releasing lever 51 in the lock condition are shown in FIG. 4. As shown in FIG. 4, the lock-releasing lever 51 is positioned to extend substantially parallel to the grip portion 14a.

In the lock condition, as the operator grasps the grip portion 14a of the handle 14, he or she may simultaneously grasp the lock-releasing lever 51. As described previously, the lock-releasing lever 51 is pivotally supported between the support portions 53a of the bracket 53 via the support shaft 54. In addition, the bracket 53 is attached to the actuation rod 52 that is axially slidably supported by the motor mount 13d. Therefore, as the operator grasps the grip portion 14a, the lock-releasing lever 51 may pivot in the counterclockwise direction about the support shaft 54 until the terminal end of the lock-releasing lever 51 contacts the grip portion 14a as shown in FIG. 5. This is a first step of a lock releasing operation. Because this first step does not move the actuation rod 52, the lock condition of the cutting unit 10 at the rest position may not be released by the first step.

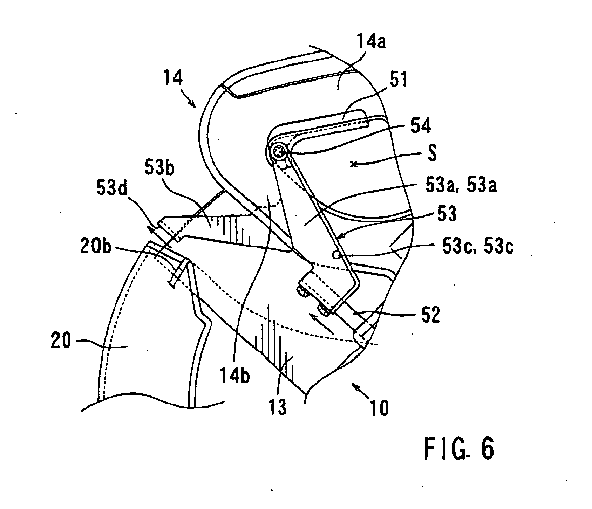

As a second step of the lock releasing operation, with the grip portion 14a and the lock-releasing lever 51 kept to be grasped, the operator subsequently squeezes or tightly grasps the grip portion 14a and the lock-releasing lever 51. As a result, the lock-releasing lever 51 may pivot in the clockwise direction about a contact point of the terminal end of the lock-releasing lever 51 with the grip portion 14a. With this second step, the support shaft 54 moves toward the grip portion 14a, so that the bracket 53 and the actuation rod 52 move leftward against the biasing force of the compression spring 55. The state after completion of the second step is shown in FIG. 6. The leftward movement of the actuation rod 52 removes the lock pin 65 from the lock hole 21c of the link arm 21, so that the unlock condition is resulted.

When the second step of the lock releasing operation has been completed, substantially the entire length of the lock-releasing lever 51 contacts the grip portion 14a.

In addition, the second step of the lock releasing operation not only removes the lock pin 65 from the lock hole 21c but also moves the terminal end 53d of the stopper arm 53b of the bracket 53 out of the moving path of the stopper edge 20b of the cover 20. As a result, the cover 20 may be permitted to pivot in the open direction.

Because the cover 20 is permitted to pivot in the open direction and the lock pin 65 is removed from the lock hole 21c, the link arm 21 is permitted to pivot along the backside surface of the blade case 13 about the support shaft 22. Therefore, the guide pin 18 can move along the guide slot 21a of the link arm 21 in response to the vertical movement of the cutting unit 10. In this way, the lock condition at the rest position of the cutting unit 10 can be released and the cutting unit 10 can be pivoted downward from the rest position.

The operation for vertically pivoting the cutting unit 10 is performed with the grip portion 14a of the handle 14 grasped by the operator. Also, the operation for cutting the workpiece is performed with the grip portion 14a grasped by the operator in order to hold the cutting unit 10 at the lower cutting position. Therefore, during these operations, the lock-releasing lever 51 is also grasped by the operator and is held in the position shown in FIG. 6, so that the lock pin 65 is kept at the unlock position (indicated by two-dot chain lines in FIG. 8). As a result, the lock device 50 is kept in the unlock condition.

Further, while the operator grasps the grip 14a of the handle 14 by his or her hand, he or she can pull the switch lever 15 by finger tips of his or her hand without need of change of position of his or her hand. As the switch lever 15 is pulled, the motor 11 is started to rotate the cutting blade 12.

As the cutting unit 10 is moved downward, the link arm 21 pivots to press the contact plate 21b, so that the cover 20 is opened to expose the lower peripheral portion of the cutting blade 12 toward the workpiece. The exposed cutting blade 12 may then be pressed against the workpiece in order to cut the same.

After the cutting operation has been finished, the cutting unit 10 is returned to the rest position (upper dead center). Then, the operator may release the handle 14. Upon releasing the handle 14, the actuation rod 52 moves rightward as viewed in FIG. 8 by the biasing force of the compression spring 55, so that the lock pin 65 is again inserted into the lock hole 21c. In this way, the cutting unit 10 is automatically locked at the rest position. At the same time that the actuation rod 52 moves rightward, the bracket 53 moves rightward toward the motor base 13d as viewed in FIGS. 1 and 2. Therefore, the support shaft 54 moves rightward to return the lock-releasing lever 51 from the operational position (second step) shown in FIG. 6 to the inoperative position shown in FIG. 4.

FIG. 3 shows the state where the cutting unit 10 has been moved downward from the rest position to the cutting position and held in the cutting position after the handle 14 has been grasped together with the lock-releasing lever 51 in order to operate the lock-releasing lever 51 for releasing the lock condition of the cutting unit 10. If the lock-releasing lever 51 has been released with the cutting unit 10 held in the cutting position as shown in FIG. 3, the actuation rod 55 will move rightward by the biasing force of the compression spring 55. However, the lock pin 65 will not be inserted into the lock hole 21c but will abut to the surface of the link arm 21 because the link arm 21 has been pivoted in order to open the cover 20. Therefore, the lock-releasing lever 51 may be moved from the inoperative position indicated by two-dot chain lines in FIG. 3 to a position proximally to the operative position indicated by solid lines in FIG. 3.

As described above, according to the first representative embodiment, the lock-releasing lever 51 can be grasped by the operator at the same time that the operator grasps the grip portion 14a of the handle 14. The lock condition of the cutting unit 10 at the rest position (upper dead center) by the lock device 50 may be released when the operator grasps the lock-releasing lever 51. Therefore, unlike the conventional device, it is not necessary to operate the lock-releasing lever by using fingertips of the hand that grasps the handle, independently of the operation for grasping the handle. As a result, the lock releasing operation can be easily performed.

In addition, according to the representative embodiment, the lock releasing operation is performed by pivoting the lock-releasing lever 51 by two successive steps in order to axially move the actuation rod 52. Therefore, in comparison with the construction incorporating an actuation rod that is rotated about its axis for releasing the lock condition, a sufficient moving distance (stroke) of the actuation rod 52 can be ensured without need of increasing the operation amount of the lock-releasing lever 51 more than necessary by increasing the inner space S of the handle 14. Therefore, it is possible to reliably perform the operation for switching between the state where the lock pin 65 is removed from the lock hole 21c (unlock condition) and the state where the lock pin 65 is inserted into the lock hole 21c (lock condition).

Further, because the lock-releasing lever 51 is pivoted by two successive steps including the first step and the second step, it is possible to position the lock-releasing lever 51 substantially in parallel to the grip portion 14a at the beginning of the first step (inoperative position) as shown in FIG. 4 and also at the end of the second step (operative position) as shown in FIG. 6. In particular, because the lock-releasing lever 51 can be positioned substantially in parallel to the grip portion 14a at the end of the second step, the operator can comfortably grasp the grip portion 14a without concern for the presence of the lock-releasing lever 51. Therefore, it is possible to improve the operability of the handle 14 during the cutting operation.

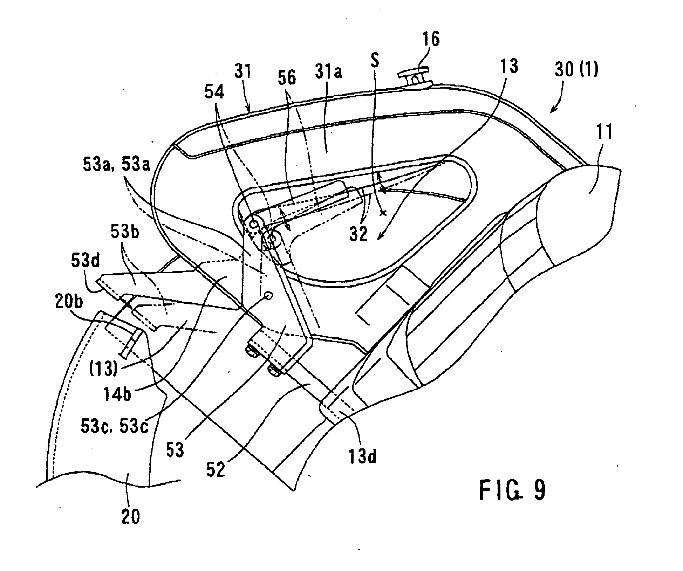

The present invention may not be limited to the above representative embodiment but may be modified in various ways. For example, in the above representative embodiment, the switch lever 15 having a relatively small size is disposed on the upper side along the inner wall defining the space S of the grip portion 14a and the lock-releasing lever 51 is disposed along the lower side of the inner wall of the grip portion 14b. However, this arrangement can be modified as shown in FIG. 9, which shows a second representative embodiment. In this second representative embodiment, a cutting unit 30 includes a switch lever 32 that has a relatively large size and is disposed along substantially the entire length of inner wall of a grip portion 31a of a handle 31. In this representative embodiment, a lock-releasing lever 56 is disposed below and along the switch lever 32.

According to the second representative embodiment, when the operator grasps the grip portion 31a of the handle 30, the operator's hand may simultaneously operate the switch lever 32. Therefore, unlike the first representative embodiment, it is not necessary to operate the switch lever 32 by extending fingertips of the hand that grasps the handle 30. As a result, the operability of the switch lever 32 can be further improved. The second representative embodiment is the same as the first representative except for the configurations and the arrangement of the switch lever 32 and the lock-releasing lever 56. Therefore, in FIG. 9, like members are given the same reference numerals as the fist representative embodiment and the description of these elements will not be repeated.

As described above, according to the second representative embodiment, when the operator grasps the grip portion 31a of the handle 31 by his or her hand, the lock-releasing lever 56 also may be grasped by the same hand for releasing the lock condition of the cutting unit 30 at the upper dead center (rest position), and at the same time, the switch lever 32 is operated by the same hand. Therefore, the operability of the cutting tool 1 can be further improved. Also in this second representative embodiment, as the lock-releasing lever 56 is operated, the bracket 53 moves leftward as viewed in FIG. 9, so that the stopper arm 53b moves in the same direction to permit the cover 20 to be opened.

Although the present invention has described in connection with the first and second representative embodiments configured as portable table saws, the present invention also may be applied to table saws that are fixedly installed at a worksite. In addition, the present invention may not be limited to table saws having a circular cutting blade or a circular saw that is rotatably driven in order to cut a workpiece. Thus, the present invention may be applied to other types of cutting tools, such as reciprocating saws having a saw blade that is linearly reciprocally moved for cutting a workpiece, and cutting tools having a grinding wheel as a cutting blade and used primarily for cutting a steel product.

Although the lock-releasing lever 51 of the lock device 50 is pivoted by two successive steps including the first step and the second step, it is possible to pivot the lock-releasing lever 51 by a single step from the inoperative position to the operative position. Otherwise, the lock-releasing lever 51 may be moved in parallel from the inoperative position to the operative position. In either cases, the same advantages as the above representative embodiments can be achieved by incorporating the arrangement for enabling the lock-releasing lever to be grasped by the hand of the operator at the same time that the operator grasps the handle. It is also advantageous to simply move the lock-releasing lever in parallel from the inoperative position to the operative position in order to axially move the actuation rod for inserting into and removing from the lock hole. Thus, this arrangement is advantageous in comparison with the arrangement in which the actuation rod is rotated about its axis, because the axial movement of the actuation rod enables to ensure a sufficient stroke of the lock pin without increasing the amount of operation of the lock-releasing lever more than necessary.

## Claims

1. A cutting tool (1) comprising:
a table (2) for placing a workpiece thereon;
a cutting unit (10) vertically movable relative to the table (2);
a lock device (50) operable to releasably lock the cutting unit (10) at an upper rest position for preventing the cutting unit (10) from moving downward, which lock device (50) comprises:
a lock-releasing lever (51; 56) operable to release a lock condition of the cutting unit (10) and a lock pin (65) movable between an unlock position and a lock position,
the cutting unit (10) includes a substantially D-shaped handle (14) defining an inner space, wherein the handle (14) includes a grip portion (14a) adapted to be grasped by an operator, and a connecting portion (14b) connecting the grip portion (14a) to the cutting unit (10); wherein
the lock-releasing lever is disposed along the grip portion (14a) of the handle (14);
**characterized in that**
an actuation rod (52) is axially movable by the operation of the lock-releasing lever (51; 56) wherein the lock pin (65) is movable between the unlock position and the lock position in response to the axial movement of the actuation rod (52); and
a bracket (53) is movable along the connecting portion (14b) of the handle (14) and connecting between the lock-releasing lever (51; 56) and the actuation rod (52), so that the lock-releasing lever (51; 56) can be operated to axially move the actuation rod (52) for releasing the lock condition as the grip portion (14a) is grasped by the operator.

2. The cutting tool (1) as in claim 1, wherein the lock-releasing lever (51; 56) is vertically pivotally supported by the bracket (53) about a pivotal axis and is operated for releasing the lock condition by two pivoting steps including a first step and a second step, wherein the lock-releasing lever (51; 56) pivots about the pivotal axis in the first step, and wherein the bracket (53) moves along the connecting portion (14b) in the second step.

3. The cutting tool (1) as in claim 1 or 2, wherein:
the cutting unit (10) further comprises a circular cutting blade (12) adapted to be rotatably driven and a movable cover (20) for covering and uncovering a lower portion of the cutting blade (12);
the bracket (53) includes a stopper arm (53b) movable between a first position and a second position with change of the position of the bracket (53) in response to the operation of the lock-releasing lever (51; 56),
the stopper arm (53b) in the first position enters a moving path of the cover (20) and prevents the cover (20) from being opened; and
the stopper arm (53b) in the second position is out of the moving path of the cover (20) and permits the cover (20) to be opened.

## Patentansprüche

1. Schneidewerkzeug (1) mit:
einem Tisch (2) zum Platzieren eines Werkstücks darauf;
einer Schneideeinheit (10), die relativ zu dem Tisch (2) vertikal bewegbar ist;
einer Verriegelungsvorrichtung (50), die betreibbar ist zum wiederlösbaren Verriegeln der Schneideeinheit (10) an einer oberen Ruheposition zum Verhindern, dass sich die Schneideeinheit (10) nach unten bewegt, wobei die Verriegelungsvorrichtung (10) enthält:
einen Sperr-Löse-Hebel (51; 56), der betreibbar ist zum Lösen eines Verriegelungszustands der Schneideeinheit (10), und einen Verriegelungsstift (65), der zwischen einer Entriegelungsposition und einer Verriegelungsposition bewegbar ist,
die Schneideeinheit (10) einen im Wesentlichen D-förmigen Griff (14) enthält, der einen Innenraum definiert, wobei der Griff (14) einen Haltebereich (14a) enthält, der angepasst ist, um von einem Benutzer ergriffen zu werden, und einen Verbindungsbereich (14b), der den Haltebereich (14a) mit der Schneideeinheit (10) verbindet; wobei
der Sperr-Löse-Hebel entlang dem Haltebereich (14a) des Griffs (14) angeordnet ist,
**dadurch gekennzeichnet, dass**
eine Betätigungsstange (52) durch Betätigung des Sperr-Löse-Hebels (51; 56) axial bewegbar ist, wobei die Verriegelungsstift (65) zwischen der Entriegelungsposition und der Verriegelungsposition in Antwort auf die axiale Bewegung der Betätigungsstange (52) bewegbar ist; und
eine Klammer (53) entlang dem Verbindungsbereich (14b) des Griffs (14) bewegbar ist und zwischen dem Sperr-Löse-Hebel (51; 56) und der Betätigungsstange (52) eine Verbindung herstellt, so dass der Sperr-Löse-Hebel (51; 56) betätigt werden kann, um die Betätigungsstange (52) axial zu bewegen zum Lösen des Verriegelungszustands, wenn der Haltebereich (14) durch den Benutzer ergriffen wird.

2. Schneidewerkzeug (1) nach Anspruch 1, bei dem der Sperr-Löse-Hebel (51; 56) vertikal schwenkbar durch die Klammer (53) um eine Schwenkachse abgestützt ist und betätigt wird zum Lösen des Verriegelungszustands durch zwei Schwenkschritte, enthaltend einen ersten Schritt und einen zweiten Schritt, wobei in dem ersten Schritt der Sperr-Löse-Hebel (51; 56) um die Schwenkachse schwenkt, und wobei in dem zweiten Schritt die Klammer (53) sich entlang dem Verbindungsbereich (14b) bewegt.

3. Schneidewerkzeug (1) nach Anspruch 1 und 2, bei dem
die Schneideeinheit (10) ferner eine kreisrunde Schneideklinge (12) enthält, die angepasst ist drehangetrieben zu werden, und eine bewegbare Abdeckung (20) zum Abdecken und zum Freilegen eines unteren Bereichs der Schneideklinge;
die Klammer (53) einen Stopperarm (53b) enthält, der zwischen einer ersten Position und einer zweiten Position bewegbar ist, wobei eine Änderung der Position der Klammer (53) in Antwort auf die Betätigung des Sperr-Löse-Hebels (51; 56) erfolgt,
der Stopperarm (53b) in der ersten Position in einen Bewegungsweg der Abdeckung (20) eintritt und verhindert, dass die Abdeckung (20) geöffnet wird; und
der Stopperarm (53b) in der zweiten Position außerhalb des Bewegungswegs der Abdeckung (20) ist und ein Öffnen der Abdeckung (20) erlaubt.

## Revendications

1. Outil de coupe (1) comprenant :
un plateau (2) pour y placer une pièce ;
une unité de coupe (10) qui peut être déplacée verticalement par rapport au plateau (2) ;
un dispositif de verrouillage (50) qui est à même de verrouiller de manière libérable l'unité de coupe (10) dans une position de repos supérieure pour empêcher l'unité de coupe (10) de se déplacer vers le bas, lequel dispositif de verrouillage (50) comprend :
un levier de libération de verrou (51 ; 56) qui est à même de libérer un état verrouillé de l'unité de coupe (10) et un cliquet (65) déplaçable entre une position de déverrouillage et une position de verrouillage,
l'unité de coupe (10) comprenant une poignée (14) sensiblement en forme de D définissant un espace interne, la poignée (14) comprenant une partie de préhension (14a) susceptible d'être saisie par un opérateur, et une partie de raccordement (14b) reliant la partie de préhension (14a) à l'unité de coupe (10) ;
dans lequel :
le levier de libération de verrou est disposé le long de la partie de préhension (14a) de la poignée (14) ;
**caractérisé en ce que** :
une tige d'actionnement (52) est déplaçable axialement par le fonctionnement du levier de libération de verrou (51 ; 56), dans lequel le cliquet (65) peut être déplacé entre la position de déverrouillage et la position de verrouillage en réponse au mouvement axial de la tige d'actionnement (52) ; et
une potence (53) peut être déplacée le long de la partie de raccordement (14b) de la poignée (14) et se raccorde entre le levier de libération de verrou (51 ; 56) et la tige d'actionnement (52) de sorte que le levier de libération de verrou (51 ; 56) puisse être actionné pour déplacer axialement la tige d'actionnement (52) pour libérer l'état verrouillé lorsque la partie de préhension (14a) est saisie par l'opérateur.

2. Outil de coupe (1) selon la revendication 1, dans lequel le levier de libération de verrou (51 ; 56) est verticalement supporté à pivotement par la potence (53) autour d'un axe de pivotement et est actionné pour libérer l'état verrouillé par deux étapes de pivotement, comprenant une première étape et une seconde étape, dans lequel le levier de libération de verrou (51 ; 56) pivote autour de l'axe de pivotement à la première étape et dans lequel la potence (53) se déplace le long de la partie de raccordement (14b) à la seconde étape.

3. Outil de coupe (1) selon la revendication 1 ou 2, dans lequel :
l'unité de coupe (10) comprend en outre une lame de coupe circulaire (12) qui est à même d'être entraînée en rotation et un couvercle mobile (20) pour recouvrir et découvrir une partie inférieure de la lame de coupe (12) ;
la potence (53) comprend un bras d'arrêt (53b) déplaçable entre une première position et une seconde position avec un changement de la position de la potence (53) en réponse au fonctionnement du levier de libération de verrou (51 ; 56),
le bras d'arrêt (53b) dans la première position pénètre dans un trajet mobile du couvercle (20) et empêche le couvercle (20) de s'ouvrir ; et
le bras d'arrêt (53b) dans la seconde position est en dehors du trajet mobile du couvercle (20) et permet au couvercle (20) de s'ouvrir.
